# EUROPÄISCHE PATENTSCHRIFT

(11) **EP 3 170 632 B1**
(45) Veröffentlichungstag und Bekanntmachung des Hinweises auf die Patenterteilung: **17.01.2024**
(21) Anmeldenummer: 16194337.8
(22) Anmeldetag: 18.10.2016
(51) Int. Cl.: B26D 7/06, B65G 47/82, B65G 47/57

(54) **VORRICHTUNG UND VERFAHREN ZUM AUFSCHNEIDEN VON LEBENSMITTELPRODUKTEN**
METHOD AND DEVICE FOR CUTTING FOOD PRODUCTS
DISPOSITIF ET PROCÉDÉ DESTINÉS AU DÉCOUPAGE DE PRODUITS ALIMENTAIRES

(30) Priorität: 26.10.2015 DE 102015118202
(43) Veröffentlichungstag der Anmeldung: 24.05.2017
(60) Teilanmeldung: 23205680.4
(73) Patentinhaber: Textor Maschinenbau GmbH, 87787 Wolfertschwenden (DE)
(72) Erfinder: Schmeiser, Jörg, 87487 Wiggensbach (DE); Mayer, Josef, 87766 Memmingerberg (DE)
(74) Vertreter: Manitz Finsterwald Patent- und Rechtsanwaltspartnerschaft mbB

(56) Entgegenhaltungen:
- EP-A1- 1 153 714
- EP-A1- 2 537 651
- EP-A1- 3 095 566
- DE-T2- 69 502 687
- FR-A1- 2 639 864
- US-A- 2 118 531

## Beschreibung

Die Erfindung betrifft eine Vorrichtung zum Aufschneiden von Lebensmittelprodukten, insbesondere einen Hochleistungs-Slicer, mit einem Schneidbereich, an dessen Ende sich in einer Schneidebene ein Schneidmesser, insbesondere rotierend und/oder umlaufend, bewegt, und mit einer Transporteinrichtung, die aufzuschneidende Produkte in einer Transportrichtung zu dem Schneidbereich einspurig oder mehrspurig transportiert, gemäß dem Oberbegriff des Anspruchs 1. Die Erfindung betrifft außerdem ein Aufschneideverfahren gemäß dem Anspruch 10.

Mit modernen Hochleistungsschneidemaschinen, die im Folgenden auch einfach als Slicer bezeichnet werden, können in Form von so genannten Riegeln oder Laiben vorliegende Lebensmittelprodukte wie beispielsweise Wurst, Käse oder Fleisch mit hoher Geschwindigkeit aufgeschnitten werden. Insbesondere in Abhängigkeit von der Art des verwendeten Schneidmessers können zwischen mehreren hundert bis einigen tausend Scheiben pro Minute von einem Produkt abgetrennt werden.

So beschreiben beispielsweise die EP 3 095 566 A1, die FR 2 639 864 A1, die EP 1 153 714 A1, die DE 695 02 687 T2, die US 2 118 531 A und die EP 2 537 651 A1 verschiedene Ausführungen von Hochleistungsschneidemaschinen, bei denen Lebensmittelprodukte wie Wurst, Käse oder Brot automatisch an die Schneidevorrichtung herangeführt werden, um sie dort innerhalb kürzester Zeit aufzuschneiden. Beispielsweise DE 695 02 687 T2 zeigt dabei eine Vorrichtung gemäß dem Oberbegriff des Anspruchs 1.

Vor allem zur Erhöhung des Produktdurchsatzes werden zunehmend mehrspurige Slicer eingesetzt, bei denen einem Schneidmesser gleichzeitig mehrere in parallelen Spuren nebeneinander liegende Produkte zugeführt und aufgeschnitten werden. Die einzelnen Spuren können sowohl zufuhrseitig als auch in sich an das Schneidmesser anschließenden Einheiten, die insbesondere einer Portionsbildung dienen, teilweise oder vollständig unabhängig voneinander betrieben werden.

Unabhängig davon, ob ein Slicer einspurig oder mehrspurig ausgeführt ist, wird generell ein möglichst kontinuierlicher Strom von einzelnen Scheiben bzw. Stücken oder von zu Portionen zusammengefassten Scheiben in Richtung einer am Ende einer Produktionslinie befindlichen Verpackungsmaschine angestrebt. Für die dem Slicer nachgeschalteten Einheiten, insbesondere jenen zur Formatbildung und Pufferung sowie zum Einlegen in eine Verpackung bzw. zur Übergabe an die Verpackungsmaschine, ist ein möglichst kontinuierlicher Scheiben- bzw. Portionsstrom mit einen minimalen Anzahl von Lücken und mit möglichst kleinen Lücken von Vorteil, da diese Einheiten dann optimal betrieben werden können.

Dem Transport der aufzuschneidenden Produkte in den Slicer hinein und innerhalb des Slicers zum Schneidmesser, was im unmittelbar vor dem Schneidmesser gelegenen Bereich, in der hier verwendeten Terminologie also im Schneidbereich, auch als Produktzufuhr bezeichnet wird, kommt im Aufschneidebetrieb eine große Bedeutung zu, und zwar insbesondere im Hinblick auf den erzielbaren Produktdurchsatz und auf die Optimierung der vorstehend erwähnten nachgeschalteten Einheiten zur Formatbildung, Pufferung und Übergabe an eine Verpackungsmaschine.

Der Produkttransport unterteilt sich typischerweise in die folgenden Bereiche: In einem Beladebereich wird die Transporteinrichtung mit den aufzuschneidenden Produkten ein- oder mehrspurig beladen. Dies kann grundsätzlich automatisch erfolgen, wobei aber in der Praxis eine manuelle Beladung durch eine oder mehrere Bedienpersonen, welche die aufzuschneidenden Produkte auf die Transporteinrichtung von Hand auflegen, nach wie vor üblich ist.

An den Beladebereich schließt sich die Transportstrecke an, die in den eigentlichen Slicer bzw. in dessen Maschinengehäuse hineinführt. Je nach Produkt bzw. konkreter Ausgestaltung des Slicers können auf der Transportstrecke verschiedene Arbeitsschritte durchgeführt werden, die für die jeweilige Schneidanwendung erforderlich sind. Insbesondere können die Produkte gewogen und abgetastet werden, um das Produktgewicht sowie Informationen über die äußere Kontur und gegebenenfalls auch über die innere Struktur eines jeden Produktes zu erhalten. Diese Produktdaten werden von einer zentralen Steuereinrichtung des Slicers der im Schneidebereich dem Schneidmesser unmittelbar vorgeschalteten Produktzufuhr zur Verfügung gestellt. Auf der Basis dieser Produktdaten kann dann die Produktzufuhr so betrieben werden, dass beispielsweise gewichtskonstante, aus mehreren einzelnen Scheiben bestehende Portionen erzeugt werden. Spezielle Arbeitsschritte während des Produkttransports in den Slicer hinein bzw. während des innerhalb des Maschinengehäuses erfolgenden Produkttransportes können aber auch für einen Aufschneidebetrieb ohne Portionierung erforderlich sein, d.h. für das reine Scheiben- oder Stückeschneiden.

Der Produkttransport erfolgt üblicherweise mittels umlaufender Endlosbänder, auf welche die Produkte beim Beladen aufgelegt werden und auf welchen die Produkte während des Transportes aufliegen.

Eine wichtige Schnittstelle ist der Übergang von der Transporteinrichtung in die vor dem Schneidmesser gelegene Produktzufuhr, die im Rahmen der hier verwendeten Terminologie zum Schneidbereich gehört. Während der im Beladebereich beginnende Produkttransport in der Praxis meist im Wesentlichen horizontal verläuft, erfolgt die Zufuhr der Produkte im Schneidbereich, also in die Schneidebene hinein, typischerweise in einer z.B. etwa 40 bis 45° zur Horizontalen geneigten, schräg nach unten verlaufenden Ebene. Hierzu ist die Produktzufuhr meist schwenkbar ausgebildet und mit einer so genannten Schwinge versehen, um die antransportierten Produkte auf ein höheres Niveau und in die zum Aufschneiden benötigte Schrägstellung zu überführen.

Derartige Zufuhrschwingen übernehmen die Produkte von der Transporteinrichtung typischerweise bereits eingangsseitig im Bereich des Eintritts in das Maschinengehäuse, damit die Produkte mittels der Transportbänder an die Zufuhrschwinge übergeben werden können.

Für die Praxis bedeutsam ist nun, dass mit dem Hochschwenken der Produkte ein unvermeidbarer Zeitverlust verbunden ist, der aufgrund der damit verbundenen Zwangspausen beim Aufschneiden nicht nur eine generell hinzunehmende Reduzierung des Produktdurchsatzes mit sich bringt, sondern zudem zu Lücken und Unregelmäßigkeiten im abgehenden Scheiben- bzw. Portionsstrom führt, die ihre Ursache insbesondere in der Art der Produkte haben, d.h. auch die Produkte selbst können einem optimalen Betrieb des Slicers sowie der dem Schneidmesser nachgeschalteten Einrichtungen abträglich sein.

Dies ist vor allem beim Aufschneiden von vergleichsweise kurzen Naturprodukten wie Schinken, also z.B. beim so genannten Bacon-Schneiden, der Fall, die in ihrer Länge relativ stark variieren können. Derartige Produkte haben aufgrund ihrer geringen Länge relativ viele Zwangspausen zur Folge, die zudem - aufgrund der variierenden Produktlänge - unregelmäßig auftreten. Diese in zeitlicher Hinsicht mehr oder weniger zufällige Verteilung der Zwangspausen wirkt zurück bis in den Beladebereich: Da die Transporteinrichtung nur in den vergleichsweise kurzen Stillstandsphasen des Transportbandes beladen werden kann, erfordert dies ein hohes Maß an permanenter Aufmerksamkeit bei der Bedienperson, die diese Stillstandsphasen abpassen und dann jeweils innerhalb der relativ kurzen zur Verfügung stehenden Zeit ein vergleichsweise schweres Produkt aufladen muss.

Dies führt zu einer hohen Belastung für das Beladepersonal, die mit zunehmender Anzahl der Spuren der Aufschneidevorrichtung noch größer wird.

Die zeitlichen Verhältnisse sollen nachstehend kurz am Beispiel des Bacon-Schneidens verdeutlicht werden:
Ein Schinken von z.B. durchschnittlich 750 mm Länge wird typischerweise innerhalb von etwa 5 Sekunden aufgeschnitten, wenn die Scheiben nicht portioniert werden. Die Produktzufuhr benötigt ebenfalls etwa 5 Sekunden, um für das nachfolgende Produkt wieder bereit zu sein, was eine Zeitspanne von etwa 10 Sekunden pro Produkt und somit einen Durchsatz von etwa sechs Produkten pro Minute für jede Spur bedeutet. Bei einem zweispurigen Slicer beispielsweise muss folglich eine Bedienperson pro Minute zwölf Produkte mit einem Einzelgewicht von typischerweise etwa 5 Kilogramm aufladen. Für jeden dieser Beladevorgänge steht ein Zeitfenster von etwa 3 Sekunden zur Verfügung, währenddessen das Transportband stillsteht, damit von der vorstehend erwähnten Zufuhrschwinge ein Produkt in die zum Schneiden nötige Schrägstellung geschwenkt werden kann.

Aufgrund der variierenden Länge der Produkte kann sich die Beladeperson allerdings nicht auf in regelmäßigen Zeitabständen auftretende Stillstandsphasen verlassen. Die zwischen den Stillstandsphasen abzuwartende Transportzeit von durchschnittlich etwa 7 Sekunden ist tatsächlich - abhängig von der Produktlänge - kürzer oder länger, was der Bedienperson eine permanent hohe Aufmerksamkeit abverlangt.

Die vorstehend erwähnte Aufschneidezeit von etwa 5 Sekunden gilt für ein Schneiden ohne Portionierung und beträgt typischerweise etwa 15 Sekunden, wenn Portionen erzeugt werden sollen. Die Wartezeit zwischen den Stillstandsphasen verlängert sich bei einem portionierenden Aufschneiden auf durchschnittlich etwa 17 Sekunden. Bei dieser Betriebsart müssen die Produkte von der Bedienperson zwar weniger häufig aufgeladen werden. Die der Bedienperson abverlangte Aufmerksamkeitsspanne zwischen zwei Beladevorgängen ist bei dieser Betriebsart aber deutlich größer.

Die Nachteile bisheriger Transporteinrichtungen sind aber nicht nur auf Auswirkungen auf den Beladebereich beschränkt. Auf den typischerweise verwendeten Transportbändern können die Produkte außerdem verrutschen. Die Positionen der Produkte auf der Transportstrecke sind folglich nicht ausreichend genau bekannt, weshalb im Prinzip für jeden der vorstehend erwähnten zusätzlichen Arbeitsschritte entlang der Transportstrecke sowie für die Übergabe der Produkte an die Produktzufuhr die Position jedes Produktes separat erfasst werden muss. Zudem wird bei einem Mehrspurbetrieb typischerweise ein gemeinsames Transportband für alle Spuren eingesetzt und erfolgt die Übergabe an die Produktzufuhr meist mit einer gemeinsamen Schwinge.

Beim mehrspurigen Aufschneiden von vergleichsweise kurzen, in der Länge relativ stark variierenden Naturprodukten sind diese also nicht nur innerhalb jeder Spur hinsichtlich der Lage der Produktanfänge und der Produktenden unregelmäßig angeordnet, sondern auch zwischen den Spuren besteht diesbezüglich keinerlei Korrelation. Ein gemeinsamer Transport und eine gemeinsame Übergabe an die vor dem Schneidmesser gelegene Produktzufuhr führen somit zu einem hohen Maß an Unregelmäßigkeit und Lückenhaftigkeit in der Anordnung der Produkte vor dem Schneidmesser bzw. in der Anordnung der mittels des Schneidmessers erzeugten Scheiben oder Portionen. Dies wiederum erfordert einen hohen mechanischen und steuerungstechnischen Aufwand entweder zufuhrseitig oder für die dem Schneidmesser nachgeschalteten Einrichtungen, um letztendlich exakte Formate von Scheiben oder Portionen zu bilden, die für die am Ende der Produktionslinie befindliche Verpackungsmaschine zwingend erforderlich sind.

Es ist daher eine Aufgabe der Erfindung, die oben erwähnten Nachteile zu beseitigen und das Aufschneiden von Lebensmittelprodukten mit möglichst geringem konstruktiven und steuerungstechnischen Aufwand zu optimieren, wobei insbesondere das Beladen der Transporteinrichtung vereinfacht, die Positionsgenauigkeit der Produkte während des Transports verbessert und ein möglichst regelmä-ßiger Scheiben- bzw. Portionsstrom ohne große Lücken für die dem Schneidmesser nachgeordneten Einrichtungen erzielt werden sollen.

Die Lösung dieser Aufgabe erfolgt jeweils durch die Merkmale der unabhängigen Ansprüche 1 und 10.

Bei der erfindungsgemäßen Vorrichtung ist vorgesehen, dass die Transporteinrichtung in der oder jeder Transportspur eine Mehrzahl von gleichzeitig in Transportrichtung angetriebenen, in Transportrichtung mit Abstand voneinander angeordneten Positionierern für die Produkte umfasst.

Die Positionierer ermöglichen eine eindeutig definierte Positionierung der Produkte sowohl beim Beladen als auch während des Transports. Die Position jedes einzelnen Produkts auf der Transporteinrichtung ist zu jedem Zeitpunkt bekannt und kann bei entsprechender Ausgestaltung der Positionierer unverrückbar stabil sein, wenn die Positionierer ein Verrutschen der Produkte und somit eine Änderung der Produktposition in Transportrichtung verhindern.

Die durch die Erfindung erzielte Positionsgenauigkeit verbessert und vereinfacht den Betrieb der Vorrichtung. Für den Beladebereich ist klar definiert, wo die einzelnen Produkte auf der Transporteinrichtung zu positionieren sind. Außerdem können die Positionierer bei entsprechender Ausgestaltung eine automatisierte Beladung vereinfachen. Zudem brauchen entlang der Transportstrecke vorgesehene Arbeitseinheiten wie beispielsweise eine Waage oder ein Scanner sowie eine Übergabeeinheit am Übergang zum Schneidbereich die Produktposition jeweils nicht selbst zu bestimmen.

Diese Vorteile sind unabhängig davon gegeben, ob die Aufschneidevorrichtung einspurig oder mehrspurig betrieben wird. Ferner ist die durch die erfindungsgemäßen Positionierer erzielte Positionsgenauigkeit prinzipiell auch dann gegeben, wenn die Abstände zwischen den Positionierern unterschiedlich groß sind. Gleichwohl ist die Erfindung besonders vorteilhaft in einer Ausgestaltung, in welcher die Positionierer in der oder jeder Spur gleichmäßig beabstandet sind. Eine solche "gleichmäßige Fachung" der Transporteinrichtung ermöglicht einen vorteilhaften getakteten Transportbetrieb, auf den nachstehend näher eingegangen wird.

Die erfindungsgemäße Positionsgenauigkeit der Produkte ist ferner unabhängig davon gegeben, ob die Positionierer, bei entsprechender Ausgestaltung, den Vorschub der Produkte über die gesamte Transportstrecke bewirken oder z.B. nur zu Beginn beim Beladen einen aktiven Produktvorschub darstellen und anschließend in erster Linie eine Anschlag- bzw. Positionierungsfunktion erfüllen. Die Vorteile der erfindungsgemäßen Produktpositionierung sind also insbesondere unabhängig davon gegeben, ob die Produkte z.B. mittels der entsprechend ausgestalteten Positionierer entlang der gesamten Transportstrecke über eine stationäre Produktauflage geschoben werden, oder ob die Produkte während des Transports auf einer sich gemeinsam mit den Positionierern bewegenden, sozusagen "mitfahrenden" Produktauflage aufliegen.

Des Weiteren sind die erfindungsgemäßen Vorteile unabhängig davon gegeben, wie die Transporteinrichtung konkret ausgestaltet ist und betrieben wird. Wenn die Positionierer beispielsweise an einem gemeinsamen langgestreckten Antriebsorgan angebracht sind, das z.B. in Form eines umlaufenden Endlosorgans vorgesehen ist, dann sorgen die Positionierer für eine exakte Positionierung der Produkte z.B. unabhängig davon, ob die Produkte auf diesem Antriebsorgan, beispielsweise einer Kette, selbst aufliegen oder ob das Antriebsorgan unterhalb oder seitlich einer stationären Produktauflage verläuft.

Die Positionierer können jeweils das hintere Ende eines Produktfaches bilden oder definieren, wobei dies aber nicht zwingend ist.

Des Weiteren kann vorgesehen sein, dass die Positionierer jeweils einen Mitnehmer bilden oder umfassen, der dazu ausgebildet ist, das Produkt während des Transports mitzunehmen, insbesondere das hintere Produktende zu beaufschlagen. Der eigentliche Vorschub der Produkte in Transportrichtung kann also durch die dann als Mitnehmer ausgestalteten Positionierer erfolgen, wobei dies aber nicht zwingend ist. Die Produkte können z.B. von einer "mitfahrenden" Produktauflage gewissermaßen getragen - anstatt ausschließlich geschoben - werden, so dass die Positionierer keine Mitnahmefunktion zu besitzen brauchen.

Auch vor dem Hintergrund der vorstehenden Ausführungen wird deutlich, dass der Begriff "Produktfach" breit zu verstehen und insbesondere nicht zwingend im Sinne einer für ein jeweiliges Produkt vorgesehenen Vertiefung zu verstehen ist. Ein Produktfach bezeichnet allgemein einen Abschnitt der Transporteinrichtung, der für genau ein Produkt vorgesehen und dessen hinteres Ende z.B. durch den jeweiligen Positionierer definiert ist.

Wie vorstehend bereits erwähnt, umfasst der Schneidbereich nicht nur das sich in der Schneidebene bewegende Schneidmesser sowie eine gegebenenfalls vorgesehene, mit dem Schneidmesser zusammenwirkende Schneidkante. Der Schneidbereich kann zudem eine Produktzufuhr umfassen, welche die Produkte dem Schneidmesser unmittelbar einspurig oder mehrspurig zuführt und beispielsweise einen oder mehrere Produkthalter oder Produktgreifer umfasst, wie sie dem Fachmann grundsätzlich bekannt sind.

Obwohl es im Prinzip möglich ist, dass die erfindungsgemäße Transporteinrichtung die Produkte unmittelbar dem Schneidmesser zuführt, eine separate Produktzufuhr folglich nicht zwingend ist, ist in einer bevorzugten Ausgestaltung eine solche Produktzufuhr vorgesehen, an welche folglich die Produkte von der Transporteinrichtung übergeben werden müssen bzw. welche die Produkte von der Transporteinrichtung übernimmt. Eine hierfür gegebenenfalls vorgesehene Übernahmeeinrichtung wird nachstehend näher erläutert.

Weitere mögliche Ausgestaltungen der Erfindung werden nachstehend näher erläutert und sind auch in den abhängigen Ansprüchen sowie in den Zeichnungen angegeben.

Vorzugsweise sind die Positionierer in Transportrichtung gleichmäßig beabstandet.

Bevorzugt ist die Beabstandung der Positionierer in Transportrichtung während des Transportbetriebs unveränderlich.

Vorzugsweise umfasst die Transporteinrichtung mehrere Transportspuren, wobei zumindest zwei Transportspuren sich hinsichtlich der Beabstandung der Positionierer voneinander unterscheiden.

Wie vorstehend bereits erwähnt, sind vorzugsweise die Positionierer in Transportrichtung gleichmäßig beabstandet. Dies ermöglicht einen besonders vorteilhaften getakteten Transportbetrieb. Erfindungsgemäß ist die Transporteinrichtung zu einem getakteten Transportbetrieb mit kontinuierlich aufeinanderfolgenden Transporttakten ausgebildet. Die Transporttakte umfassen erfindungsgemäß jeweils eine Bewegungsphase mit sich in Transportrichtung bewegenden Produktfächern und eine Wartephase mit stillstehenden Produktfächern. Bei für die Praxis relevanten Anwendungen, wie z.B. vorstehend anhand des Bacon-Schneidens erläutert, ergibt sich hierdurch gewissermaßen ein quasi-kontinuierlicher Produkttransport mit Wartephasen, die jeweils deutlich kürzer sind als die Bewegungsphasen. In der Wahrnehmung einer Bedienperson im Beladebereich bewegt sich die Transporteinrichtung kontinuierlich. Zudem treten die zum Beladen genutzten Stillstandsphasen der Transporteinrichtung aufgrund der Taktung in zeitlich strenger Regelmäßigkeit auf, was bei manueller Beladung das Bedienpersonal deutlich weniger "stresst" und im Fall einer Beladeautomatik deren Ausgestaltung vereinfacht.

Zudem hat ein getakteter Transportbetrieb in Verbindung mit der erfindungsgemäß gegebenen Positionsgenauigkeit der Produkte den Vorteil, dass entlang der Transportstrecke eine oder mehrere Arbeitsstationen für die Produkte angeordnet werden können, deren Betrieb gemäß einer Ausführungsform der Erfindung jeweils auf die Taktung der Transporteinrichtung abgestimmt werden kann. Eine Arbeitsstation, für die ein stillstehendes Produkt von Vorteil ist, wie beispielsweise eine Wiegestation, kann jeweils in der Wartephase aktiv sein. Andere Arbeitsstationen, für welche gerade ein sich bewegendes Produkt vorteilhaft ist, können jeweils in der Bewegungsphase aktiv sein. Insbesondere kann eine solche Arbeitsstation einen Produktscanner zum Bestimmen der äußeren Produktkontur und/oder der inneren Produktstruktur umfassen. Je nach "Behandlung", die ein Produkt an einer Arbeitsstation erfährt, kann das Produkt entweder auf der Transporteinrichtung verbleiben oder wird das Produkt vorübergehend von der Arbeitsstation übernommen, beispielsweise durch vorübergehendes Anheben oder Ausheben des Produktes.

Die Transporteinrichtung kann die Produkte bzw. die Produktfächer z.B. durch die Arbeitsstation hindurch bewegen. Dabei kann die Arbeitsstation stationär sein. Alternativ kann die Arbeitsstation vorübergehend mit den Produktfächern mitbewegbar sein, d.h. es kann gewissermaßen eine "fliegende Behandlung" (z.B. Wiegen oder Abtasten) der Produkte erfolgen. Hierdurch können Wartephasen bzw. Stillstandszeiten vermieden werden.

Vorzugsweise ist eine Arbeitsstation dazu ausgebildet, die Produkte an der Transporteinrichtung zu wiegen.

Bevorzugt ist vorgesehen, dass an einer Arbeitsstation die Produkte jeweils von dem Positionierer oder von der Transporteinrichtung entkoppelt werden, z.B. durch Anheben oder Ausheben. Alternativ oder zusätzlich kann eine relativ geringfügige Vorwärtsbewegung für die Produkte an der Arbeitsstation vorgesehen sein, damit das Produkt von dem Positionierer bzw. Mitnehmer freikommen kann. Eine solche Vermeidung störender Einflüsse auf die Produkte ist insbesondere dann von Vorteil, wenn die Produkte an der Arbeitsstation gewogen werden.

Gemäß einem Ausführungsbeispiel ist vorgesehen, dass die Transporteinrichtung und/oder die Arbeitsstation dazu ausgebildet ist, im Bereich der Arbeitsstation die Produkte jeweils vorübergehend anzuheben, außer Eingriff mit dem Positionierer zu bringen und/oder von dem Positionierer zu beabstanden, insbesondere durch eine kombinierte Hub- und Vorwärtsbewegung für die Produkte.

Durch die Taktung der Transporteinrichtung kann außerdem erreicht werden, dass - bezogen auf die aufeinanderfolgenden Produkte - im abgehenden, durch das Aufschneiden erzeugten Scheiben- bzw. Portionsstrom die Lücken weniger groß sind und die Unregelmäßigkeiten reduziert oder ganz beseitigt sind. Dies ist besonders vorteilhaft in einem spurindividuellen Mehrspurbetrieb mit zufuhrseitig vollständig unabhängig betreibbaren Spuren, und zwar insbesondere dann, wenn sich die Spuren hinsichtlich Länge und Anordnung der Produkte relativ stark voneinander unterscheiden, da bei einem spurindividuellen Betrieb die eine Spur nicht auf die andere Spur warten muss.

Die Transporteinrichtung kann gemäß einer Betriebsweise zu zyklischen Transportbewegungen ausgebildet sein, wobei in den Transporttakten jeweils das Produkt angehoben, eine Vorwärtsbewegung mit Produkt ausgeführt, das Produkt abgesenkt und eine Rückwärtsbewegung ohne Produkt ausgeführt wird. Eine solche schrittweise Vorwärtsbewegung der Produkte kann mit oder ohne Produktauflage erfolgen. Die Produkte können dabei von Produktfach zu Produktfach bewegt oder jeweils gemeinsam mit zumindest einem das jeweilige Produktfach bildenden oder definierenden Bauteil bewegt werden.

Wie vorstehend bereits erwähnt, kann die Transporteinrichtung für die Positionierer wenigstens ein langgestrecktes Antriebsorgan umfassen, das mittels eines Antriebs in Transportrichtung bewegbar ist und an dem die Positionierer angebracht sind. Insbesondere kann dieses Antriebsorgan als ein gemeinsamer Antrieb für alle Positionierer dienen. Der Antrieb für dieses Antriebsorgan kann beispielsweise in eine Umlenkung oder in ein Führungsmittel für das Antriebsorgan integriert sein. Dies erfolgt bevorzugt in einem stromaufwärts, vom Schneidbereich entfernt gelegenen Bereich der Transporteinrichtung.

Das Antriebsorgan kann beispielsweise unterhalb der Produktfächer oder seitlich neben den Produktfächern verlaufen. Ein gegebenenfalls vorgesehener Parallelversatz des Antriebsorgans bezüglich einer Mittelachse der Produktfächer bzw. der transportierten Produkte kann grundsätzlich beliebig groß gewählt werden.

Für die oder jede Transportspur können mehrere, insbesondere gemeinsam angetriebene bzw. angesteuerte und/oder synchronisierte, Antriebsorgane vorgesehen sein, die beispielsweise alle unterhalb der Produktfächer oder zu beiden Seiten jeweils neben den Produktfächern verlaufen.

Generell können alle hierin offenbarten Ausgestaltungen der Erfindung, die nicht ausdrücklich auf einen mehrspurigen Transportbetrieb gerichtet sind, für jede Transportspur zur Anwendung kommen, und zwar unabhängig davon, ob die Transporteinrichtung lediglich eine einige Transportspur oder mehrere Transportspuren aufweist.

Bei mehreren Transportspuren sind bevorzugt jeweils für zwei unmittelbar benachbarte Transportspuren wenigstens zwei langgestreckte Antriebsorgane vorgesehen, die zwischen den Produktfächern dieser Transportspuren verlaufen. Dabei kann das eine Antriebsorgan der linken Transportspur und das andere Antriebsorgan der rechten Transportspur zugeordnet sein. Im Hinblick auf einen vorteilhaften kompakten Aufbau können die beiden Antriebsorgane entweder benachbart angeordnet oder in geeigneter Weise kombiniert sein, und zwar derart, dass ein spurindividueller Betrieb möglich ist.

Wenn ein jeweiliges Antriebsorgan ein oder mehrere umlaufende Endlosorgane umfasst, dann sind diese jeweils insbesondere in Form einer Kette, eines Riemens, eines Bandes oder eines Seils vorgesehen. Der Verlauf dieses Endlosorgans kann durch zwei oder mehr Umlenkorgane festgelegt werden.

Wie ebenfalls vorstehend bereits erwähnt, kann das langgestreckte Antriebsorgan ausschließlich dazu dienen, die Positionierer anzutreiben. Die Auflage für die Produkte ist dann auf andere Weise realisiert, beispielsweise durch eine stationäre Produktauflage, über welche die Produkte mittels der dann insbesondere als Mitnehmer ausgebildeten Positionierer geschoben werden.

Alternativ kann das Antriebsorgan beispielsweise eine untere Produktauflage und/oder eine seitliche Produktanlage bilden. Wenn beispielsweise als Antriebsorgan eine umlaufende Kette zum Einsatz kommt, können ausreichend breite, im Querschnitt U-förmige Kettenglieder zum Einsatz kommen, in welche die Produkte eingelegt werden können.

Eine "mitfahrende" Produktauflage ist insbesondere für solche Produkte von Vorteil, die nicht geschoben werden sollen, beispielsweise für Käse.

Wenn dagegen die Produktauflage der Transporteinrichtung stationär ist und die Produkte mittels der Positionierer über diese Produktauflage geschoben werden, hat dies den Vorteil eines besonders einfachen Aufbaus der Transporteinrichtung. Ein weiterer Vorteil ist, dass eine Positionierung des hinteren Produktendes am jeweiligen Positionierer automatisch sichergestellt werden kann. Ein derartiger Produkttransport ist beispielsweise für Schinken sowie für gefrorene Produkte besonders gut geeignet.

Eine stationäre Produktauflage kann ein- oder mehrteilig ausgeführt sein. Ferner kann eine stationäre Produktauflage flächig ausgebildet sein und so gewisserma-ßen eine "Gleitbahn" für die Produkte bilden. Alternativ kann die Produktauflage linien- oder gitterförmig ausgebildet sein und eine oder mehrere langgestreckte Auflageschienen für die Produkte aufweisen, die sich in Transportrichtung erstrecken.

Unabhängig davon, ob eine Produktauflage stationär ist oder sich gemeinsam mit den Positionierern bewegt, kann die Produktauflage geteilt sein und zwischen einem linken Auflageteil und einem rechten Auflageteil einen sich in Transportrichtung erstreckenden Zwischenraum aufweisen. Bei einer stationären Produktauflage können sich die Positionierer durch diesen Zwischenraum hindurch erstrecken, um beispielsweise mit einem unterhalb der Produktfächer verlaufenden langgestreckten Antriebsorgan gekoppelt zu werden. Die Auflageteile können beispielsweise von zwei mit Parallelversatz zueinander verlaufenden Stangen oder Blechen gebildet sein. Eine geteilte Produktauflage kann auch bei einer nicht-stationären Produktauflage von Vorteil sein, da zumindest ein Teil der Unterseite der Produkte zugänglich ist. Eine solche Zugänglichkeit kann insbesondere für eine Behandlung oder Handhabung der Produkte beispielsweise an einer der vorstehend erwähnten Arbeitsstationen genutzt werden.

Wenn die Transporteinrichtung eine nicht-stationäre Produktauflage für die Produkte umfasst, dann ist bevorzugt vorgesehen, dass die Produktauflage eine Mehrzahl von Einzelauflagen umfasst, die gemeinsam mit den Positionierern in Transporteinrichtung bewegbar sind. Für jedes Produktfach können die Einzelauflagen jeweils unterteilt sein und insbesondere mehrere einzelne Glieder umfassen. Bei Verwendung eines umlaufenden Endlossystems können diese Glieder für den Rückweg am vorderen Ende der Transportstrecke auf relativ engem Raum umgelenkt werden.

Zum Beladen der Transporteinrichtung kann eine Beladestation vorgesehen sein, die oberhalb der Transporteinrichtung angeordnet ist. Die Beladestation kann derart ausgestaltet sein, dass die Transporteinrichtung automatisch jeweils ein unteres Produkt aus der Beladestation entnimmt. Die Beladestation kann folglich eine Art Magazin umfassen, in welchem Produkte in einem oder mehreren Stapeln übereinander angeordnet sind. Die Entnahme von Produkten aus der Beladestation kann unmittelbar durch die Positionierer der Transporteinrichtung erfolgen. Alternativ kann die Transporteinrichtung auf elektrischem oder mechanischem Wege einen Impuls auslösen oder einen Schalter betätigen, um auf diese Weise an der Beladestation die Abgabe eines Produkts auszulösen.

Die Transporteinrichtung kann in einem Beladebereich mit einer Positionierungshilfe versehen sein, die dafür sorgt, dass ein jeweiliges Produkt erst durch den betreffenden Positionierer der Transporteinrichtung mitgenommen wird und durch die bis zu diesem Zeitpunkt eine Mitnahme des Produkts durch eine sich in Transportrichtung bewegende Produktauflage der Transporteinrichtung unterbunden ist. Beispielsweise kann die Positionierungshilfe eine erhöhte stationäre Auflage aufweisen, auf welche jedes Produkt gelangt und auf welcher das Produkt verbleibt, bis es von dem ihm zugeordneten Positionierer auf die sich bewegende Produktauflage geschoben wird. Hierdurch ist auch beim Einsatz einer nicht-stationären Produktauflage automatisch eine korrekte Positionierung der Produkte am jeweiligen Positionierer sichergestellt.

Wie an anderer Stelle bereits erwähnt, kann zwischen der Transporteinrichtung und dem Schneidbereich eine Übernahmeeinrichtung vorgesehen sein, die von der Transporteinrichtung kommende Produkte übernimmt. Die Übernahmeeinrichtung kann dazu ausgebildet sein, die Produkte von einer Transportstrecke in eine von der Transportstrecke verschiedene Zufuhrstrecke zu überführen. Die Transportstrecke und die Zufuhrstrecke können insbesondere in voneinander verschiedenen Ebenen liegen. Dabei kann die Übernahmeeinrichtung insbesondere für die Eintaktung der Produkte in die Produktzufuhr sorgen. Während die Transportstrecke von einem Beladebereich bis zu der Produktzufuhr bzw. zu der Übernahmeeinrichtung und gegebenenfalls durch eine oder mehrere Arbeitsstationen hindurch führen kann, führt die Zufuhrstrecke zur Schneidebene. Die Übernahmeeinrichtung kann folglich eine Schnittstelle oder einen Übergang zwischen diesen beiden Strecken bzw. Bereichen darstellen.

Die Übernahmeeinrichtung kann entweder in einer jeweiligen Wartephase oder in einer Bewegungsphase aktiv sein. Beispielsweise kann die Übernahmeeinrichtung einen Rechen zum Abnehmen von momentan stillstehenden Produkten auf der Transporteinrichtung aufweisen. Die Übernahmeeinrichtung kann aber auch derart ausgebildet sein, dass die Produkte jeweils während einer Bewegungsphase von der Transporteinrichtung beispielsweise auf eine nachgeordnete Produktablage der Übernahmeeinrichtung aufgeschoben werden.

Erfindungsgemäß ist ein getakteter Betrieb der Transporteinrichtung vorgesehen und deren Taktung auf den Betrieb der Übernahmeeinrichtung abgestimmt. Dies ist vorteilhaft für den in der Praxis wichtigen Fall, dass der eigentlichen Schneidefunktion des Slicers die so genannte "Master"-Funktion zukommt und sich insbesondere die vorgelagerten Bereiche wie z.B. Beladung, Transport und Übergang in den Schneidbereich bzw. in die dem Schneidmesser unmittelbar vorgelagerte Produktzufuhr nach dem zu richten haben, was durch den Schneidbetrieb vorgegeben wird, d.h. eine "Slave"-Funktion erfüllen. Diese Aufteilung in "Master" und "Slave" ist aber nicht zwingend und kann zumindest zeitweise auch anders erfolgen. So kann beispielsweise beim Anfahren des Slicers z.B. nach einem Wechsel der Produktsorte solange die Transporteinrichtung eine "Master"-Funkion innehaben, bis die ersten Produkte in die Produktzufuhr gelangen, woraufhin die Produktzufuhr bzw. der eigentliche Schneidebetrieb wieder die "Masterfunktion" übernimmt.

Die Übernahmeeinrichtung ist insbesondere dazu ausgebildet, die antransportierten Produkte auf ein erhöhtes Niveau zu bringen, von welchem aus die Produkte dann im Schneidbereich dem Schneidmesser zugeführt werden können. Insbesondere kann also die Übernahmeeinrichtung dafür sorgen, dass die Produkte aus einer zumindest im Wesentlichen horizontalen Transportebene in eine zur Horizontalen geneigte, für das Aufschneiden erforderliche Zufuhrebene des Schneidbereichs gebracht und folglich in eine erhöhte Schrägstellung überführt werden.

Die Übernahmeeinrichtung ist gemäß einer Variante der Erfindung von dem Schneidbereich gebildet, insbesondere von zumindest einem Teilbereich einer Produktzufuhr des Schneidbereichs. Dabei kann die Übernahmeeinrichtung eine bewegbare, insbesondere schwenkbare, Produktauflage umfassen. An dieser Produktauflage können ein oder mehrere Produkthalter oder Produktgreifer jeweils samt zugehörigem Antrieb angeordnet sein.

Die Übernahmeeinrichtung ist gemäß einer anderen Variante der Erfindung zusätzlich zu dem Schneidbereich bzw. zu einer Produktzufuhr des Schneidbereichs vorgesehen und dazu ausgebildet, die von der Transporteinrichtung kommenden Produkte an die Produktzufuhr zu übergeben. Die Übernahmeeinrichtung kann z.B. eine separate Einrichtung wie beispielsweise eine Greif- und/oder Hebeeinrichtung, z.B. in Form eines Roboters, sein, die den Übergang zwischen Transporteinrichtung und Schneidbereich bzw. Produktzufuhr des Schneidbereichs darstellt. Die Übernahmeeinrichtung muss also nicht Bestandteil der Transporteinrichtung oder des Schneidbereichs sein und kann z.B. seitlich neben der oder den Spuren angeordnet sein, um den Transfer der Produkte zu ermöglichen.

Die Übernahmeeinrichtung kann der Transporteinrichtung nachgeordnet sein, wobei insbesondere die Produkte von der Transporteinrichtung an die Übernahmeeinrichtung übergeben werden, beispielsweise durch Aufschieben auf eine Produktauflage.

Alternativ können die Transporteinrichtung und die Übernahmeeinrichtung einander in Transportrichtung überlappen. Insbesondere kann die Übernahmeeinrichtung zumindest zu einem Teil in die Transporteinrichtung integriert sein. Hierdurch ist es insbesondere für die Übernahmeeinrichtung möglich, sich von unterhalb der Transporteinrichtung durch diese hindurch zu bewegen und ein jeweiliges Produkt, beispielsweise mittels eines Rechens, abzugreifen.

Die Transporteinrichtung kann in Transportrichtung unterbrochen sein. Alternativ oder zusätzlich kann eine Unterbrechung im Anschluss an die Transporteinrichtung vorgesehen sein. Im Bereich der Unterbrechung kann eine Arbeitsstation angeordnet sein, insbesondere zum Abtasten der Produkte. Eine solche Unterbrechung ermöglicht es auf vergleichsweise einfache Weise, z.B. eine Abtastebene auf der oder am Ende der Transportstrecke einzurichten.

Bei einem erfindungsgemäßen Verfahren zum Aufschneiden von Lebensmittelprodukten mittels einer Vorrichtung wie hierin beschrieben werden die aufzuschneidenden Produkte mittels einer Transporteinrichtung in einer Transportrichtung einspurig oder mehrspurig zu einem Schneidbereich transportiert, an dessen Ende sich in einer Schneidebene ein Schneidmesser, insbesondere rotierend und/oder umlaufend, bewegt, wobei die Transporteinrichtung in der oder jeder Transportspur eine Mehrzahl von gleichzeitig in Transportrichtung angetriebenen, in Transportrichtung mit Abstand voneinander angeordneten Positionierern für die Produkte umfasst.

Mögliche Ausgestaltungen des erfindungsgemäßen Verfahrens sind nachstehend erwähnt und ergeben sich auch aus den vorstehenden Ausführungen, der nachstehenden Figurenbeschreibung sowie den Zeichnungen.

Die Produkte können während des Transports mittels der Positionierer in Transportrichtung geschoben werden.

Bei dem erfindungsgemäßen Verfahren wird die Transporteinrichtung getaktet mit kontinuierlich aufeinanderfolgenden Transporttakten betrieben.

Die Produktfächer können mittels der Transporteinrichtung durch wenigstens eine innerhalb der Vorrichtung angeordnete Arbeitsstation für die Produkte hindurchbewegt werden. Die Arbeitsstation kann in Abstimmung auf eine Taktung der Transporteinrichtung betrieben werden.

In einem Beladebereich können die Produkte automatisch mittels der Transporteinrichtung entnommen werden.

In einem Beladebereich kann eine Mitnahme eines jeweiligen Produktes durch eine gemeinsam mit den Positionierern in Transporteinrichtung bewegbare Einzelauflage der Transporteinrichtung bis zu einer Mitnahme des Produktes durch den betreffenden Positionierer unterbunden werden.

Die von der Transporteinrichtung kommenden Produkte können von einer Übernahmeeinrichtung übernommen werden. Die Übernahmeeinrichtung kann in Abstimmung auf eine Taktung der Transporteinrichtung betrieben werden.

Die Produkte können mittels der Übernahmeeinrichtung angehoben werden.

Die Produkte können an die Übernahmeeinrichtung übergeben oder die Produkte können mittels der Übernahmeeinrichtung direkt von der Transporteinrichtung abgenommen werden.

Es kann vorgesehen sein, dass die Taktung der Transporteinrichtung, insbesondere im Hinblick auf Wartephasen und/oder Bewegungsphasen zur Beladung der Transporteinrichtung mit Produkten und/oder zur Durchführung von Arbeitsschritten an Arbeitsstationen im Bereich der Transporteinrichtung, durch den Schneidbetrieb bestimmt wird.

Von der Transporteinrichtung kommende Produkte können von einer Übernahmeeinrichtung übernommen werden, wobei die Taktung der Transporteinrichtung durch den Betrieb der Übernahmeeinrichtung bestimmt wird.

Es kann wenigstens eine Arbeitsstation für die Produkte vorgesehen sein, wobei die Transporteinrichtung die Produktfächer durch die Arbeitsstation hindurch bewegt und/oder die Arbeitsstation vorübergehend mit den Produktfächern mitbewegt wird. Der Betrieb der Arbeitsstation kann durch den Schneidbetrieb und/oder durch den Betrieb der Übernahmeeinrichtung bestimmt werden. Alternativ kann der Betrieb der Arbeitsstation durch die Taktung der Transporteinrichtung bestimmt werden.

Ferner kann vorgesehen sein, dass die Transporteinrichtung mehrere Transportspuren umfasst, wobei die Transportspuren unabhängig voneinander in Transportrichtung angetrieben und/oder betrieben werden.

Die Erfindung wird im Folgenden beispielhaft unter Bezugnahme auf die Zeichnung beschrieben. Es zeigen:
- Fig. 1: schematisch in einer Seitenansicht eine mögliche Ausführungsform einer erfindungsgemäßen Aufschneideeinrichtung,
- Fig. 2: in einer Draufsicht schematisch einen Ausschnitt einer erfindungsgemäßen einspurigen Transporteinrichtung,
- Fig. 3: in einer Draufsicht schematisch einen Ausschnitt einer erfindungsgemäßen zweispurigen Transporteinrichtung,
- Fig. 4: schematisch eine Draufsicht auf einen Ausschnitt einer erfindungsgemäßen Transporteinrichtung gemäß einer weiteren Ausführungsform,
- Fig. 5: schematisch eine Seitenansicht eines Übergabebereiches einer erfindungsgemäßen Aufschneidevorrichtung, und
- Fig. 6: schematisch eine Draufsicht auf einen Übergabebereich gemäß einer weiteren Ausführungsform einer erfindungsgemäßen Aufschneidevorrichtung.

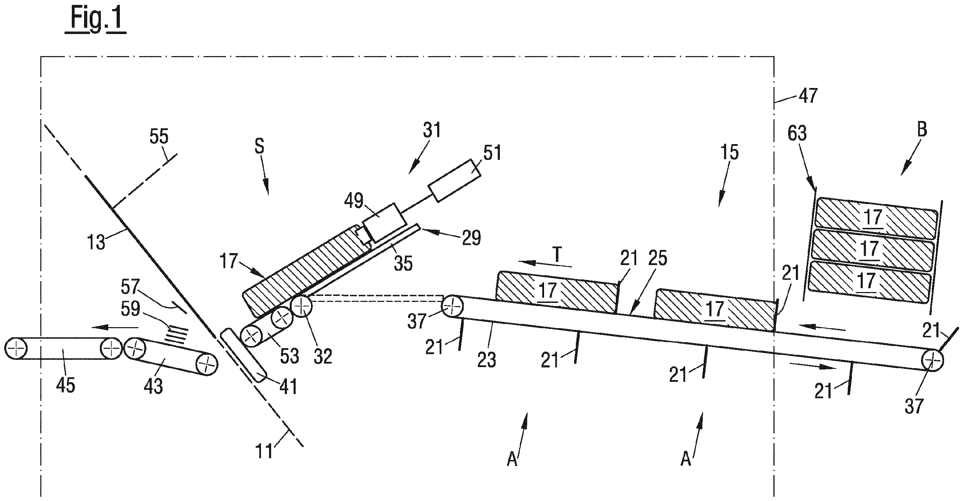

Bei der erfindungsgemäßen Aufschneidevorrichtung gemäß Fig. 1 handelt es sich um einen Hochgeschwindigkeitsslicer, der Lebensmittelprodukte 17 mit hoher Geschwindigkeit aufschneiden kann, die einem in einer Schneidebene 11 um eine Achse 55 umlaufenden Schneidmesser 13, bei dem es sich beispielsweise um ein so genanntes Sichelmesser handelt, mehrspurig zugeführt werden.

Mittels des Schneidmessers 13 abgetrennte Scheiben 57 fallen auf ein Portionierband 43 und bilden dort Portionen 59, die anschließend auf ein nachfolgendes Steuerband 45 transportiert werden, an welches sich üblicherweise weitere, hier nicht dargestellte Einrichtungen anschließen, wie es einleitend erläutert ist.

Die Schneidebene 11 bildet das Ende eines Schneidbereiches S, der zusätzlich zu dem Schneidmesser 13 und einer mit diesem zusammenwirkenden Schneidkante 41 eine Produktzufuhr 31 umfasst.

In einer bevorzugten Ausgestaltung ist die Produktzufuhr 31 vollständig spurindividuell ausgebildet und umfasst für jede Spur einen während des Aufschneidens mit dem hinteren Produktende zusammenwirkenden Produktgreifer 49, eine nachstehend näher erläuterte Produktauflage 35 sowie einen vorderen Produktförderer 53 unmittelbar vor dem Schneidmesser 13. Der vordere Produktförderer 53 dient insbesondere zur Unterstützung des Produktes 17 sowie zur Steuerung des Produktvorschubs. Für die Produktgreifer 49 ist ein Antrieb 51 vorgesehen.

Die Produktzufuhr 31, insbesondere die Auflagen 35 für die einzelnen Spuren, bilden zumindest einen Teil einer Übernahmeeinrichtung 29, die von einer nachstehend näher erläuterten Transporteinrichtung 15 kommende Produkte 17 übernimmt.

Mittels der Transporteinrichtung 15 werden die Produkte 17 in einer gegenüber der Horizontalen leicht ansteigenden Ebene herantransportiert und anschließend mittels der Übernahmeeinrichtung 29 auf ein höheres Niveau gebracht und dabei in eine etwa um 40 bis 45° gegenüber der Horizontalen geneigte Schrägstellung überführt, in welcher die Auflage 35 senkrecht zur Schneidebene 11 verläuft.

In dem in Fig. 1 dargestellten Ausführungsbeispiel ist die von der Auflage 35 gebildete Übernahmeeinrichtung 29 um eine Achse 32 zwischen der dargestellten Schrägstellung und einer in Fig. 1 durch gestrichelte Linien angedeuteten Übernahmestellung verschwenkbar. Möglichkeiten für das Zusammenspiel zwischen der Transporteinrichtung 15 und der Übernahmeeinrichtung 29 werden an anderer Stelle näher beschrieben.

Zur Verdeutlichung eines Unterschieds zum Stand der Technik ist in Fig. 1 durch eine strichpunktierte Linie ein Maschinengehäuse 47 des Slicers dargestellt. Die Erfindung ermöglicht es, die aufzuschneidenden Produkte 17 mittels der Transporteinrichtung 15 vergleichsweise weit in das Maschinengehäuse 47 hinein zu transportieren und somit den Transfer der Produkte in die erhöhte, schräggestellte Schneidstellung innerhalb des Maschinengehäuses 47 zu bewerkstelligen. Eine Verlängerung des Maschinengehäuses 47 nach hinten, also entgegen der Transportrichtung, ist hierfür nicht erforderlich. Vielmehr ermöglicht es die Erfindung, zumindest den zu verschwenkenden Teil der Produktzufuhr 31 im Vergleich zum Stand der Technik kürzer auszubilden. Hierdurch wird gegenüber bekannten Slicern in einem hinteren oberen Bereich, in Fig. 1 also oben rechts im Maschinengehäuse 47, für den verschwenkbaren Teil der Produktzufuhr 31 und den oder die Produktgreifer 49 samt Antrieb 51 kein oder jedenfalls vergleichsweise wenig Bauraum benötigt. Der somit zur Verfügung stehende Bauraum kann für andere Zwecke genutzt werden, beispielsweise für nachstehend näher erläuterte Arbeitsstationen A, die in Fig. 1 jeweils lediglich hinsichtlich ihrer Position bezüglich der Transportrichtung T angedeutet sind.

Bei aus dem Stand der Technik bekannten Slicern werden innerhalb des Maschinengehäuses 47 verlaufende Transportbänder für die Produkte 17 zusammen mit den unmittelbar vor dem Schneidmesser 13 angeordneten Teilen der Produktzufuhr verschwenkt. Diesen Transportbändern werden die Produkte eingangsseitig im Bereich des Eintritts in das Maschinengehäuse 47 übergeben. Bei den bekannten Slicern befindet sich somit jeweils nur das gerade aufzuschneidende Produkt 17 innerhalb des Maschinengehäuses 47 und das nächste Produkt 17 rückt erst während der Beladung nach. Der sich innerhalb des Maschinengehäuses 47 befindliche Teil der erfindungsgemäßen Transporteinrichtung 15 braucht dagegen nicht verschwenkt zu werden. Dadurch können sich erfindungsgemäß immer mehrere Produkte 17 auf der Transporteinrichtung 15 in dem Maschinengehäuse 47 befinden.

In dem Ausführungsbeispiel der Fig. 1 umfasst die Transporteinrichtung 15 für jede Transportspur ein um zwei Umlenkungen 37 umlaufendes, endloses Antriebsorgan 23, das zum Beispiel in Form einer Kette, eines Riemens, eines Bandes oder eines Seils vorgesehen ist und dessen Antrieb vorzugsweise über die hintere Umlenkung 37 erfolgt.

An dem Antriebsorgan 23, das im Hinblick auf eine bevorzugte Ausgestaltung und aufgrund eines bevorzugten, nachstehend näher erläuterten getakteten Transportbetriebs im Folgenden auch einfach als Taktkette bezeichnet wird, sind in gleichmäßigen Abständen Portionierer 21 angebracht, die im Folgenden auch als Mitnehmer bezeichnet werden, da sie zum Beispiel bei entsprechender Ausgestaltung der Produktauflage auch eine Mitnahmefunktion für die Produkte 17 erfüllen können. Die Portionierer bzw. Mitnehmer 21 werden somit gemeinsam von der Taktkette 23 angetrieben. Der Abstand zwischen zwei unmittelbar aufeinanderfolgenden Mitnehmern 21 ist größer als die größte erwartete Länge der aufzuschneidenden Produkte 17 gewählt.

Erfindungsgemäß bildet jeder Abschnitt der Transporteinrichtung 15 zwischen zwei aufeinanderfolgenden Mitnehmern 21 in jeder Spur folglich ein Produktfach für genau ein aufzuschneidendes Produkt 17. Die Mitnehmer 21 können in Transportrichtung T verstellbar oder versetzbar sein, um die Länge der Produktfächer anpassen zu können.

Die Transporteinrichtung 15 umfasst des Weiteren eine nicht im Einzelnen dargestellte Produktauflage 25, die stationär ausgebildet sein kann, so dass die Produkte 17 auf der Produktauflage 25 mittels der Mitnehmer 21 in Transportrichtung T zum Schneidbereich S geschoben werden. Die Mitnehmer 21 wirken hierbei also jeweils mit dem hinteren Produktende zusammen. Hierdurch ist automatisch eine eindeutig definierte Positionierung der Produkte 17 sichergestellt. Die Position jedes Produkts 17 bezüglich der Taktkette 23 und somit innerhalb der Aufschneidevorrichtung ist einer nicht dargestellten zentralen Steuereinrichtung, die unter anderem den Antrieb der Taktkette 23 in jeder Transportspur 19 steuert, zu jedem Zeitpunkt bekannt.

Wie einleitend bereits erläutert, erfolgt der Transportbetrieb getaktet derart, dass sich an eine vergleichsweise lange Bewegungsphase, in welcher die Produkte 17 in Transportrichtung T zum Schneidbereich S gefördert werden, eine relativ kurze Wartephase mit stillstehenden Mitnehmern 21 anschließt.

Die Taktung kann für die einzelnen Transportspuren 19 der Transporteinrichtung 15, der sich anschließenden Übernahmeeinrichtung 29 und der Produktzufuhr 31 unterschiedlich gewählt werden, so dass vom Beladebereich B bis zum gemeinsamen Schneidmesser 13, also über die gesamte Zufuhrseite des Slicers, eine vollständig spurindividuelle Handhabung der Produkte 17 erfolgen kann. Ein derartiger spurindividueller zufuhrseitiger Betrieb des Slicers ist aber nicht zwingend.

Die verschiedenen Funktionsbereiche des Slicers können jeweils hinsichtlich ihres Betriebs für jede Transportspur 19 auf deren Taktung abgestimmt werden. Die Rollen von "Master" und "Slave" können aber auch, wie an anderer Stelle erläutert, anders verteilt sein.

Die Funktionsbereiche umfassen insbesondere den vor dem Maschinengehäuse 47 gelegenen Beladebereich B, eine oder mehrere innerhalb des Maschinengehäuses 47 gelegene Arbeitsstationen A, einen Übergabebereich zwischen dem Ende der Transporteinrichtung 15 und dem Schneidbereich S, insbesondere also die Übernahmeeinrichtung 29, sowie den Schneidbereich S selbst.

An dem Beladebereich B kann die Beladung der Transporteinrichtung 15 mit Produkten 17 z.B. manuell erfolgen. Es kann aber auch - wie in Fig. 1 angedeutet - ein Produktmagazin 63 vorgesehen sein, das eine automatische Beladung der Transporteinrichtung 15 bzw. eine automatische Entnahme von Produkten 17 mittels der Transporteinrichtung 15 ermöglicht.

Auch die dem Schneidmesser 13 nachgeordneten Einrichtungen, wie insbesondere das Portionierband 43 und das daran anschließende Steuerband 45, können mehrspurig ausgeführt und spurindividuell betreibbar sein. Auch dies ist nicht zwingend.

Zu welchem "Grad" der erfindungsgemäße Slicer insgesamt mehrspurig und spurindividuell betreibbar ausgeführt ist, kann von der oder den Anwendungen abhängig gemacht werden, für welche der Slicer primär konzipiert ist.

Bei den Arbeitsstationen A handelt es sich beispielsweise um eine Waage, die während einer Wartephase mit stillstehenden Produkten 17 arbeitet, sowie einen Produktscanner, der jeweils bei sich in Transportrichtung T bewegendem Produkt 17 dessen äußere Kontur und/oder innere Struktur ermittelt, wie dies für sich genommen aus dem Stand der Technik grundsätzlich bekannt ist.

Was die erwähnte Waage an einer der Arbeitsstationen A anbetrifft, so kann diese beispielsweise dazu ausgebildet sein, ein zu wiegendes Produkt 17 vorübergehend von der Produktauflage 25 der jeweiligen Transportspur 19 anzuheben. Hierzu kann die Waage mit einem Rechen versehen sein. Dabei kann die Taktkette 23 ein vergleichsweise kurzes Stück entgegen der Transportrichtung T bewegt werden, um auf diese Weise einen Freiraum zwischen dem hinteren Produktende und dem betreffenden Mitnehmer 21 zu schaffen. Zusätzlich oder alternativ kann das Produkt 17 im Bereich der Waage etwas angehoben und damit von der Produktauflage 25 entkoppelt werden.

Alternativ oder zusätzlich kann eine Wiegefunktion in die Übernahmeeinrichtung 29 integriert sein. Für das Wiegen kann beispielsweise der Schwenkvorgang genutzt werden, z.B. durch Erfassen und Auswerten des diesbezüglichen Antriebsstroms.

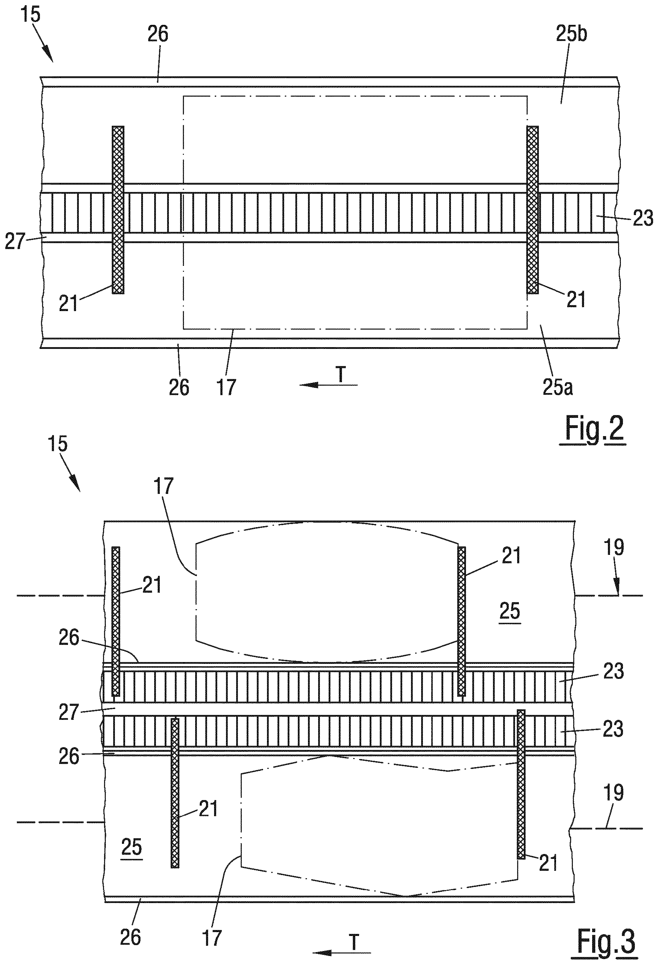

Fig. 2 zeigt eine Draufsicht auf eine einspurige Transporteinrichtung 15. An der endlos umlaufenden Taktkette 23 sind in regelmäßigen Abständen Mitnehmer 21 angebracht. Die zu transportierenden Produkte 17, von denen in Fig. 2 nur eines durch eine strichpunktierte Linie dargestellt ist und die jeweils mit ihrem hinteren Produktende am betreffenden Mitnehmer 21 anliegen, liegen auf einer stationären Produktauflage 25 auf, die ein in Transportrichtung T gesehen linkes Auflageteil 25a und ein rechtes Auflageteil 25b umfasst. Die Produktauflage 25 ist also mittig geteilt und mit einem mittigen Zwischenraum 27 versehen, durch den sich die Mitnehmer 21 zur Kopplung mit der Taktkette 23 hindurch erstrecken können.

Die beiden Auflageteile 25a, 25b sind hier in Form von Winkelblechen beispielsweise aus Edelstahl oder Kunststoff vorgesehen. Die Produkte 17 liegen jeweils auf den eine gemeinsame Ebene bildenden, den Zwischenraum 27 definierenden Auflageabschnitten auf und werden von auf diesen Abschnitten senkrecht stehenden Seitenwänden 26 geführt bzw. an einem seitlichen Ausbrechen gehindert.

In den Bewegungsphasen während des getakteten Transportbetriebs werden die Produkte 17 folglich mittels der jeweils am hinteren Produktende angreifenden Mitnehmer 21 über die Auflageabschnitte der stationären Produktauflageteile 25a, 25b geschoben. Die Taktkette 23 verläuft dabei unterhalb der von den Auflageteilen 25a, 25b gebildeten Auflageebene für die Produkte 17, so dass die Produkte 17 mit der Taktkette 23 nicht in Berührung gelangen.

Die Größe und die Form der Mitnehmer 21 können an die jeweilige Produktsorte angepasst werden. Beispielsweise können die Mitnehmer 21 mit einer konkaven Anschlagfläche versehen sein, um entsprechend geformte Produktenden optimal beaufschlagen zu können.

Des Weiteren können die Mitnehmer 21 lösbar an der Taktkette 23 befestigt sein, um zu Reinigungszwecken oder für einen Wechsel der Produktsorte leicht ausgewechselt oder versetzt werden zu können.

In dem Ausführungsbeispiel der Fig. 2 reichen die Mitnehmer 21 nicht bis an die Seitenwände 26 heran. Dies ist alternativ möglich. Dabei kann vorgesehen sein, dass die Mitnehmer 21 von den Seitenwänden 26 geführt werden. Die Positionsgenauigkeit der Produkte 17 in der Transporteinrichtung 15 kann hierdurch weiter erhöht werden.

Eine bezüglich der jeweiligen Transportspur 19 mittig verlaufende Transportkette 23 ist nur eine von mehreren erfindungsgemäßen Möglichkeiten. In einer alternativen Ausgestaltung kann die Transportkette 23 auch seitlich neben den Produktfächern verlaufen. Dies ist sowohl für einspurige als auch für mehrspurige Transporteinrichtungen 15 möglich.

Besonders vorteilhaft können seitlich verlaufende Taktketten 23 zum Einsatz kommen, wenn gemäß dem Ausführungsbeispiel der Fig. 3 die Transporteinrichtung 15 ein Paar (oder alternativ mehrere Paare) von unmittelbar nebeneinander verlaufenden Transportspuren 19 aufweist. Hierbei sind zwei unmittelbar nebeneinander verlaufende Taktketten 23, die bevorzugt unabhängig voneinander antreibbar sind, mittig zwischen zwei jeweils stationären Produktauflagen 25 angeordnet, über welche die Produkte 17 jeweils mittels seitlich nach außen auskragender, an der jeweiligen Transportkette 23 befestigter Mitnehmer 21 geschoben werden.

In Fig. 3 sind zwei mögliche Varianten für die Ausgestaltung der Produktauflagen 25 dargestellt. In der oberen, in Transportrichtung T rechten Transportspur 19 ist außen keine Seitenwand vorgesehen, d.h. in dieser Transportspur 19 ist die Produktauflage 25 seitlich offen. Die Produkte 17 sind folglich gut zugänglich, was beispielsweise für eine Abtastung der Produkte 17 in einer der Arbeitsstationen A (vgl. Fig. 1) genutzt werden kann.

Eine solche offene Ausgestaltung ist aber nicht zwingend. Am Beispiel der in Fig. 3 unteren, in Transportrichtung T linken Transportspur 19 ist dargestellt, dass die Produktauflage 25 entsprechend dem Ausführungsbeispiel der Fig. 2 außen mit einer Seitenwand 26 versehen sein kann.

Innen, d.h. zu dem zwischen den Auflageabschnitten der Produktauflagen 25 vorhandenen Zwischenraum 27 hin, durch welchen sich die Mitnehmer 21 zur Kopplung mit der jeweiligen Taktkette 23 hindurch erstrecken können, sind die Produktauflagen 25 jeweils mit einer Seitenwand 26 versehen.

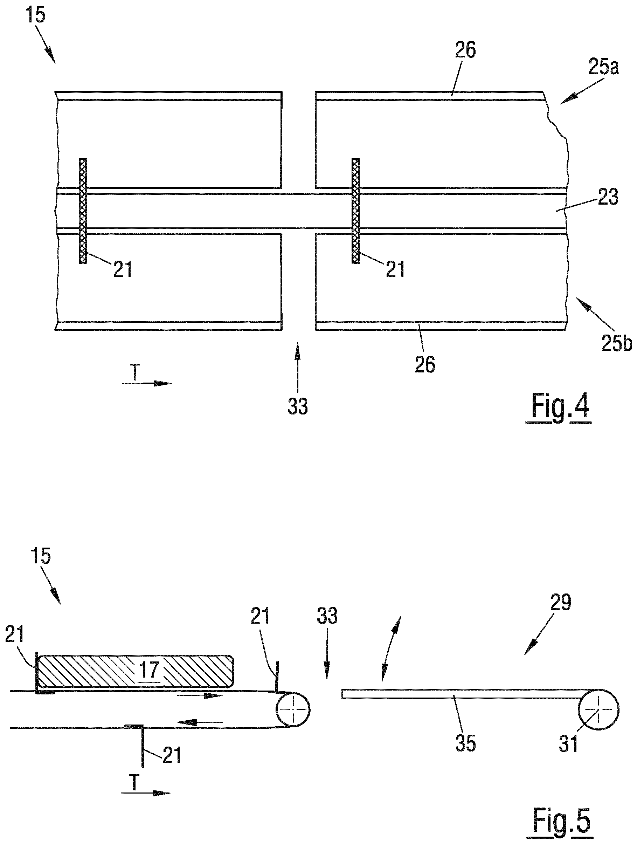

Fig. 4 zeigt eine Möglichkeit, wie eine Transportspur 19 einer ein- oder mehrspurigen Transporteinrichtung 15 im Bereich einer der Arbeitsstationen A (vgl. Fig. 1) ausgestaltet sein kann, um an dieser Arbeitsstation A in den Bewegungsphasen des getakteten Transportbetriebs jeweils ein sich bewegendes Produkt 17 abzutasten.

Die entsprechend dem Ausführungsbeispiel der Fig. 2 ausgestaltete Produktauflage, d.h. die beiden Auflageteile 25a, 25b, sind zur Bildung einer Lücke 33 in Transportrichtung T unterbrochen. Ohne Beeinträchtigung einer sicheren Auflage der Produkte ermöglicht die Lücke 33 einen Zugang zu den Produkten sowohl von der Seite als auch von unten. Auf diese Weise können die Produkte von einem die jeweilige Arbeitsstation bildenden, z.B. nach dem Lichtschnittverfahren arbeitenden Scanner in einer durch die Lücke 33 hindurch verlaufenden Abtastebene beleuchtet und mittels Kameras erfasst werden. Eine Beeinträchtigung der "freien Sicht" auf die Unterseite der Produkte 17 durch die Taktkette 23 kann vernachlässigt bzw. bei der Auswertung der Abtastdaten z.B. durch Vorgabewerte berücksichtigt werden.

Während in dem Ausführungsbeispiel der Fig. 4 die Produktabtaststation in die Transportstrecke integriert ist, zeigt Fig. 5 eine andere Möglichkeit zur Integration einer Abtasteinrichtung in die erfindungsgemäße Vorrichtung.

In Fig. 5 ist der Übergang zwischen dem in Transportrichtung T vorderen Ende der Transporteinrichtung 15 und einer Übernahmeeinrichtung 29 dargestellt, die eine um eine Achse 31 verschwenkbare Auflage 35 aufweist, um die antransportierten Produkte für den Aufschneidevorgang in eine Schrägstellung zu überführen (vgl. Fig. 1).

Die Übernahmeeinrichtung 29 ist hier der Transporteinrichtung 15 nachgeordnet. Die Produkte 17 werden jeweils mittels der Mitnehmer 21 auf die verschwenkbare Auflage 35 aufgeschoben. Zwischen dem vorderen Ende der Transporteinrichtung 15 und der Auflage 35 ist in Transportrichtung T eine Lücke 33 vorgesehen, die es erlaubt, die Produkte 17 jeweils während ihrer Übergabe an die Auflage 35 von allen Seiten beispielsweise in einer senkrecht zur Transporteinrichtung T durch die Lücke 33 hindurch verlaufenden Ebene abzutasten.

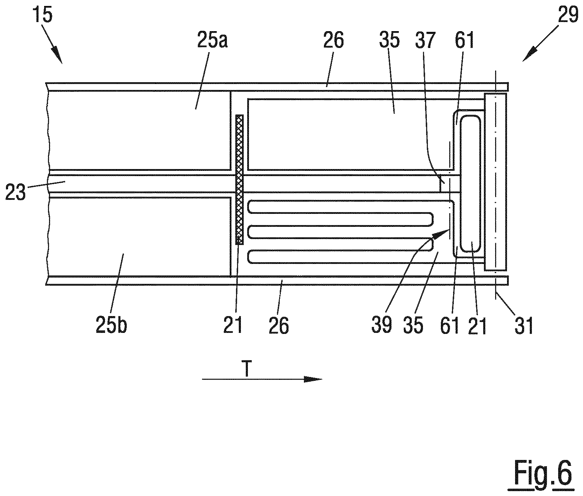

Fig. 6 zeigt eine alternative Möglichkeit für das Zusammenwirken von Transporteinrichtung 15 und Übernahmeeinrichtung 29 zur Übernahme von Produkten 17. Von der Übernahmeeinrichtung 29 ist hier wie in Fig. 5 eine um eine Achse 31 verschwenkbare Auflage 35 dargestellt. Dabei veranschaulicht Fig. 6 gleichzeitig zwei mögliche Varianten für die Ausgestaltung der Auflage 35. Auf der in Transportrichtung T linken Seite der wiederum mittig in dieser Transportspur 19 angeordneten Taktkette 23 ist die Auflage 35 als durchgehende Platte ausgebildet. Auf der rechten Seite dagegen ist die Auflage 35 von einem Rechen gebildet.

Die in Fig. 6 vorgenommene unterschiedliche Ausgestaltung der Auflage 35 dient - wie gesagt und wie in Fig. 3 hinsichtlich der Seitenwände 26 vorgenommen - nur zur Veranschaulichung der verschiedenen Möglichkeiten. Eine solche Ausgestaltung ist in der Praxis zwar möglich, wobei bevorzugt in der Praxis aber die Auflage 35 auf beiden Seiten der Taktkette 23 gleich ausgeführt ist.

Sowohl auf eine plattenförmige Auflage 35 als auch auf eine rechenartig ausgebildete Auflage 35 werden die mittels der Mitnehmer 21 herantransportierten Produkte jeweils aufgeschoben. Die aufgeschobenen Produkte können dann durch Verschwenken der Auflage 35 in die Schrägstellung überführt werden.

Während im Ausführungsbeispiel der Fig. 5 die Übernahmeeinrichtung 29 der Transporteinrichtung 15 nachgeordnet ist, sind hier die Transporteinrichtung 15 und die Übernahmeeinrichtung 29 einander in Transportrichtung T überlappend bzw. integriert angeordnet. Die Produkte 17 werden folglich mittels der verschwenkbaren Auflage 35 aus der Transporteinrichtung 15 ausgehoben.

Ein solches Aushubkonzept ermöglicht eine besonders kompakte, in Transportrichtung T Platz sparende Umsetzung eines Übergabesystems für die Produkte 17.

Um das "Abtauchen" der an der endlos umlaufenden Taktkette 23 befestigten Mitnehmer 21 am in Transportrichtung T vorderen Ende der Taktkette 23 zu ermöglichen, die dort um eine eine Achse 39 definierende Umlenkung 37 umgelenkt wird, ist die Auflage 35 der Übernahmeeinrichtung 29 mit entsprechend geformten Aussparungen 61 versehen.

In den vorstehend erläuterten Ausführungsbeispielen ist die Produktauflage 25 jeweils flächig ausgebildet, d.h. die Auflageabschnitte der Bleche bilden jeweils eine breite Gleit- oder Schiebebahn für die Produkte 17. Die Auflage für die Produkte 17 kann alternativ linien- oder streifenförmig ausgeführt sein. Beispielsweise können die Produkte 17 auf Stangen, Stäben oder vergleichsweise schmalen Profilen aufliegen. In Abhängigkeit von der Größe und der Konsistenz der Produkte 17 können zwei derartige Gleitschienen genügen, die beispielsweise bei mittiger Anordnung der Taktkette 23 gemäß Fig. 2 jeweils auf einer Seite der Taktkette 23 verlaufen und bei seitlicher Anordnung der Taktkette 23 entsprechend Fig. 3 für jede der Transportspuren 19 anstelle des flächigen Auflageabschnitts parallel zueinander neben der Taktkette 23 verlaufen.

Wie bereits an anderer Stelle erwähnt, kann anstelle einer stationären Produktauflage 25, über welche die Produkte 17 geschoben werden, eine sich gemeinsam mit den Produkten 17 in Transportrichtung T bewegende Auflage für die Produkte 17 vorgesehen sein.

Eine derartige "mitfahrende" Produktauflage kann beispielsweise von mehreren parallel zueinander verlaufenden, gemeinsam angetriebenen Endlosorganen wie beispielsweise einer Kette, einem Riemen, einem Band oder einem Seil gebildet sein. Beispielsweise können zwei parallel beabstandet zueinander verlaufende Zahnriemen gemeinsam als eine gleichzeitig für den Vorschub der Produkte 17 sorgende Produktauflage 25 dienen. Zur Anpassung an unterschiedliche Produktsorten können diese Antriebsorgane hinsichtlich ihres seitlichen Abstands verstellbar sein.

Derartige endlos umlaufende Antriebsorgane bilden dann jeweils gemeinsam eine Taktkette im Sinne der Erfindung. Die Mitnehmer für die Produkte 17 können in Form von nach außen abstehenden Anschlagelementen vorgesehen sein, die an zumindest einem der Antriebsorgane befestigt sind.

Anstelle einer solchen Mehrzahl von Einzel-Antriebsorganen zur Bildung einer erfindungsgemäßen Taktkette kann ein einziges endlos umlaufendes Antriebsorgan derart breit ausgebildet sein, dass die Produkte auf dieser Taktkette aufliegen können. Die Mitnehmer können dann wiederum in Form von nach außen abstehenden Anschlagelementen vorgesehen sein. Eine solche Taktkette kann aus einer Vielzahl von im Querschnitt jeweils U-förmigen, in Transportrichtung T vergleichsweise kurzen, z.B. streifen- oder plattenförmigen Kettengliedern bestehen, die somit gleichzeitig eine Auflage und eine Seitenführung für die Produkte bilden.

Ein weiterer Vorteil des erfindungsgemäßen Transportkonzepts besteht darin, dass eine Mitnahme der Produkte 17 durch am hinteren Produktende angreifende Mitnehmer 21 ohne Beeinträchtigung der Positionsgenauigkeit das Überwinden von Steigungen ermöglicht, wie es in Fig. 1 durch die in Transportrichtung T vergleichsweise leicht ansteigende Transporteinrichtung 15 dargestellt ist. Hierdurch kann im Beladebereich B das Beladeniveau vergleichsweise niedrig sein, um dem Bedienpersonal ein manuelles Auflegen von Produkten zu erleichtern bzw. eine Beladehilfe oder eine Beladeautomatik einfacher ausgestalten zu können, wobei aber die Produkte 17 bereits mittels der Transporteinrichtung 15 auf ein vergleichsweise hohes Niveau innerhalb des Maschinengehäuses 47 gebraucht werden können, was wiederum das Überführen der Produkte 17 in die gewünschte Schrägstellung im Schneidbereich S in konstruktiver Hinsicht sowie hinsichtlich des dafür erforderlichen Platzbedarfes vereinfacht.

### Bezugszeichenliste

- 11: Schneidebene
- 13: Schneidmesser
- 15: Transporteinrichtung
- 17: Produkt
- 19: Transportspur
- 21: Positionierer
- 23: Antriebsorgan
- 25: Produktauflage
- 25a: Auflageteil
- 25b: Auflageteil
- 26: Seitenwand
- 27: Zwischenraum
- 29: Übernahmeeinrichtung
- 31: Produktzufuhr
- 32: Achse
- 33: Lücke
- 35: Auflage der Übernahmeeinrichtung
- 37: Umlenkung
- 39: Achse
- 41: Schneidkante
- 43: Portionierband
- 45: Steuerband
- 47: Maschinengehäuse
- 49: Produkthalter, Produktgreifer
- 51: Antrieb
- 53: Produktförderer
- 55: Achse
- 57: Scheibe
- 59: Portion
- 61: Aussparung
- 63: Produktmagazin

- S: Schneidbereich
- T: Transportrichtung
- A: Arbeitsstation
- B: Beladebereich

## Patentansprüche

1. Vorrichtung zum Aufschneiden von Lebensmittelprodukten (17), insbesondere Hochleistungs-Slicer,
mit einem Schneidbereich (S), an dessen Ende sich in einer Schneidebene (11) ein Schneidmesser (13), insbesondere rotierend und/oder umlaufend, bewegt, und
mit einer Transporteinrichtung (15), die aufzuschneidende Produkte (17) in einer Transportrichtung (T) zu dem Schneidbereich (S) einspurig oder mehrspurig transportiert,
wobei die Transporteinrichtung (15) in der oder jeder Transportspur (19) eine Mehrzahl von gleichzeitig in Transportrichtung (T) angetriebenen, in Transportrichtung (T) mit Abstand voneinander angeordneten Positionierern (21) für die Produkte (17) umfasst und jeder Abschnitt der Transporteinrichtung (15) zwischen zwei aufeinanderfolgenden Positionierern (21) in jeder Spur ein Produktfach für genau ein aufzuschneidendes Produkt (17) bildet, **dadurch gekennzeichnet,**
**dass** die Transporteinrichtung (15) zu einem getakteten Transportbetrieb mit kontinuierlich aufeinanderfolgenden Transporttakten ausgebildet ist, wobei die Transporttakte jeweils eine Bewegungsphase mit sich in Transportrichtung (T) bewegenden Produktfächern und eine Wartephase mit stillstehenden Produktfächern umfassen, und
**dass** eine Übernahmeeinrichtung (29) vorgesehen ist, die von der Transporteinrichtung (15) kommende Produkte (17) übernimmt, wobei die Übernahmeeinrichtung (29) von einer Produktzufuhr (31) des Schneidbereichs (S) gebildet ist, oder wobei die Übernahmeeinrichtung (29) zusätzlich zu einer Produktzufuhr (31) des Schneidbereichs (S) vorgesehen und dazu ausgebildet ist, die von der Transporteinrichtung (15) kommenden Produkte (17) an die Produktzufuhr (31) zu übergeben, und wobei die Taktung der Transporteinrichtung (15) auf den Betrieb der Übernahmeeinrichtung (29) abgestimmt ist.

2. Vorrichtung nach Anspruch 1,
**dadurch gekennzeichnet,**
**dass** die Übernahmeeinrichtung (29) die Produkte (17) von einer Transportstrecke in eine Zufuhrstrecke überführt,
insbesondere wobei die Übernahmeeinrichtung (29) dazu ausgebildet ist, die Produkte (17) anzuheben und/oder auszuheben, und/oder wobei die Übernahmeeinrichtung (29) der Transporteinrichtung (15) nachgeordnet und die Transporteinrichtung (15) dazu ausgebildet ist, die Produkte (17) an die Übernahmeeinrichtung (29) zu übergeben, und/oder wobei die Übernahmeeinrichtung (29) dazu ausgebildet ist, die Produkte (17) direkt von der Transporteinrichtung (15) abzunehmen.

3. Vorrichtung nach Anspruch 1 oder 2,
**dadurch gekennzeichnet,**
**dass** innerhalb der Vorrichtung wenigstens eine Arbeitsstation (A) für die Produkte (17) angeordnet ist, wobei die Transporteinrichtung (15) die Produktfächer durch die Arbeitsstation (A) hindurch bewegt und/oder wobei die Arbeitsstation (A) vorübergehend mit den Produktfächern (17) mitbewegbar ist, und wobei der Betrieb der Arbeitsstation (A) auf die Taktung der Transporteinrichtung (15) abgestimmt oder durch den Schneidbetrieb und/oder durch den Betrieb der Übernahmeeinrichtung (29) bestimmt ist.

4. Vorrichtung nach einem der vorhergehenden Ansprüche,
**dadurch gekennzeichnet,**
**dass** die Positionierer (21) jeweils das hintere Ende eines Produktfaches bilden oder definieren, und/oder
**dass** die Positionierer (21) jeweils einen Mitnehmer bilden oder umfassen, der dazu ausgebildet ist, das Produkt (17) während des Transports mitzunehmen, insbesondere das hintere Produktende zu beaufschlagen.

5. Vorrichtung nach einem der vorhergehenden Ansprüche,
**dadurch gekennzeichnet,**
**dass** die Transporteinrichtung (15) mehrere Transportspuren (19) umfasst, wobei die Transportspuren (19) unabhängig voneinander in Transportrichtung (T) antreibbar sind.

6. Vorrichtung nach einem der vorhergehenden Ansprüche,
**dadurch gekennzeichnet,**
**dass** die Transporteinrichtung (15) für die Positionierer (21) wenigstens ein langgestrecktes Antriebsorgan (23) umfasst, das mittels eines Antriebs in Transportrichtung (T) bewegbar ist und an dem die Positionierer (21) angebracht sind, wobei insbesondere das langgestreckte Antriebsorgan (23) unterhalb der Produktfächer verläuft, oder das langgestreckte Antriebsorgan (23) seitlich neben den Produktfächern verläuft.

7. Vorrichtung nach Anspruch 6,
**dadurch gekennzeichnet,**
**dass** für die oder jede Transportspur (19) mehrere langgestreckte Antriebsorgane (23) vorgesehen sind, und/oder dass die Transporteinrichtung (15) mehrere Transportspuren (19) umfasst, wobei jeweils für zwei unmittelbar benachbarte Transportspuren (19) wenigstens zwei langgestreckte Antriebsorgane (23) vorgesehen sind, die zwischen den Produktfächern dieser Transportspuren (19) verlaufen, und/oder dass das Antriebsorgan (23) wenigstens ein umlaufendes Endlosorgan umfasst, und/oder dass die Produktfächer zumindest teilweise von dem langgestreckten Antriebsorgan (23) gebildet und/oder begrenzt sind.

8. Vorrichtung nach einem der vorhergehenden Ansprüche,
**dadurch gekennzeichnet,**
**dass** die Transporteinrichtung (15) eine Produktauflage (25) umfasst, auf der die Produkte (17) während des Transportbetriebs aufliegen, wobei insbesondere die Produktauflage (25) stationär ist, und/oder dass die Produktauflage (25) geteilt ist und zwischen einem linken Auflageteil (25a) und einem rechten Auflageteil (25b) ein sich in Transportrichtung (T) erstreckender Zwischenraum (27) vorhanden ist, und/oder dass die Produktauflage (25) eine Mehrzahl von Einzelauflagen umfasst, die gemeinsam mit den Positionierern (21) in Transporteinrichtung (T) bewegbar sind.

9. Vorrichtung nach einem der vorhergehenden Ansprüche,
**dadurch gekennzeichnet,**
**dass** eine Beladestation oberhalb der Transporteinrichtung (15) angeordnet ist, und/oder dass die Transporteinrichtung (15) in einem Beladebereich (B) mit einer Positionierungshilfe versehen ist, die eine Mitnahme eines jeweiligen Produktes (17) durch eine Einzelauflage bis zur Mitnahme des Produktes (17) durch den betreffenden Positionierer (21) unterbindet.

10. Verfahren zum Aufschneiden von Lebensmittelprodukten (17) mittels einer Vorrichtung nach einem der vorhergehenden Ansprüche,
bei dem die aufzuschneidenden Produkte (17) mittels einer Transporteinrichtung (15) in einer Transportrichtung (T) einspurig oder mehrspurig zu einem Schneidbereich (S) transportiert werden, an dessen Ende sich in einer Schneidebene (11) ein Schneidmesser (13), insbesondere rotierend und/oder umlaufend, bewegt,
wobei die Transporteinrichtung (15) in der oder jeder Transportspur (19) eine Mehrzahl von gleichzeitig in Transportrichtung (T) angetriebenen, in Transportrichtung (T) mit Abstand voneinander angeordneten Positionierern (21) für die Produkte (17) umfasst, und
wobei die Transporteinrichtung (15) getaktet mit kontinuierlich aufeinanderfolgenden Transporttakten betrieben wird.

11. Verfahren nach Anspruch 10,
**dadurch gekennzeichnet,**
**dass** die Taktung der Transporteinrichtung (15), insbesondere Wartephasen und/oder Bewegungsphasen zur Beladung der Transporteinrichtung (15) mit Produkten (17) und/oder zur Durchführung von Arbeitsschritten an Arbeitsstationen (A) im Bereich der Transporteinrichtung (15), durch den Schneidbetrieb bestimmt wird, und/oder dass von der Transporteinrichtung (15) kommende Produkte (17) von einer Übernahmeeinrichtung (29) übernommen werden, wobei die Taktung der Transporteinrichtung (15) durch den Betrieb der Übernahmeeinrichtung (29) bestimmt wird, und/oder dass wenigstens eine Arbeitsstation (A) für die Produkte (17) vorgesehen ist, wobei die Transporteinrichtung (15) die Produktfächer durch die Arbeitsstation (A) hindurch bewegt und/oder die Arbeitsstation (A) vorübergehend mit den Produktfächern (17) mitbewegt wird, und wobei der Betrieb der Arbeitsstation (A) durch den Schneidbetrieb und/oder durch den Betrieb der Übernahmeeinrichtung (29) bestimmt wird.

12. Verfahren nach Anspruch 10 oder 11,
**dadurch gekennzeichnet,**
**dass** die Transporteinrichtung (15) mehrere Transportspuren (19) umfasst, wobei die Transportspuren (19) unabhängig voneinander in Transportrichtung (T) angetrieben und/oder betrieben werden.

13. Verfahren nach einem der Ansprüche 10 bis 12,
**dadurch gekennzeichnet,**
**dass** die Transporteinrichtung (15) zu zyklischen Transportbewegungen ausgebildet ist, wobei in den Transporttakten jeweils das Produkt (17) angehoben, eine Vorwärtsbewegung mit Produkt (17) ausgeführt, das Produkt (17) abgesenkt und eine Rückwärtsbewegung ohne Produkt (17) ausgeführt wird.

## Claims

1. An apparatus for slicing food products (17), in particular a high-performance slicer,
having a cutting region (S) at whose end a cutting blade (13) moves, in particular in a rotating and/or revolving manner, in a cutting plane (11); and having a transport device (15) which transports products (17) to be sliced in a direction of transport (T) to the cutting region (S) over one track or multiple tracks,
wherein the transport device (15) in the or each transport track (19) comprises a plurality of positioners (21) for the products (17) simultaneously driven in the direction of transport (T) and arranged spaced apart from one another in the direction of transport (T) and each section of the transport device between two consecutive positioners (21) in each track forms a product compartment for exactly one product (17) to be sliced,
**characterized in that**
the transport device (15) is configured for a cyclic transport operation with continuously consecutive transport cycles,
wherein the transport cycles respectively comprise a movement phase with product compartments moving in the direction of transport (T) and a waiting phase with stationary product compartments, and
**in that** a takeover device (29) is provided which takes over products (17) coming from the transport device (15), with the takeover device (29) being formed by a product supply (31) of the cutting region (S), or with the takeover device (29) being provided in addition to a product supply (31) of the cutting region (S) and being configured to transfer the products (17) coming from the transport device (15) to the product supply (31), and with the cycling of the transport device (15) being coordinated with the operation of the transfer device (29).

2. An apparatus according to claim 1,
**characterized in that**
the takeover device (29) moves the products (17) from a transport line into a supply line,
in particular wherein the takeover device (29) is configured to raise and/or to lift the products (17), and/or wherein the takeover device (29) is disposed downstream of the transport device (15) and the transport device (15) is configured to transfer the products (17) to the takeover device (29), and/or wherein the takeover device (29) is configured to remove the products (17) directly from the transport device (15).

3. An apparatus according to claim 1 or 2,
**characterized in that**
at least one workstation (A) for the products (17) is arranged within the apparatus, with the transport device (15) moving the product compartments through the workstation (A), and/or with the workstation (A) being temporarily movable along with the product compartments (17), and with the operation of the workstation (A) being coordinated with the cycling of the transport device (15) or being determined by the cutting operation and/or by the operation of the takeover device (29).

4. An apparatus according to any one of the preceding claims,
**characterized in that**
the positioners (21) each form or define the rear end of a product compartment, and/or
**in that** the positioners (21) each form or comprise an entrainer which is configured to entrain the product (17) during the transport, in particular to act on the rear product end.

5. An apparatus according to any one of the preceding claims,
**characterized in that**
the transport device (15) comprises a plurality of transport tracks (19), with the transport tracks (19) being drivable independently of one another in the direction of transport (T).

6. An apparatus according to any one of the preceding claims,
**characterized in that**
the transport device (15) comprises at least one elongated drive member (23) for the positioners (21) which is movable in the direction of transport (T) by means of a drive and at which the positioners (21) are attached, with the elongated drive member (23) in particular extending beneath the product compartments or the elongated drive member (23) extending laterally next to the product compartments.

7. An apparatus according to claim 6,
**characterized in that**
a plurality of elongated drive members (23) are provided for the or each transport track (19), and/or **in that** the transport device (15) comprises a plurality of transport tracks (19), with at least two elongated drive members (23) respectively being provided for two directly adjacent transport tracks (19) and extending between the product compartments of these transport tracks (19), and/or **in that** the drive member (23) comprises at least one revolving endless member, and/or **in that** the product compartments are at least partly formed and/or bounded by the elongated drive member (23).

8. An apparatus according to any one of the preceding claims,
**characterized in that**
the transport device (15) comprises a product support (25) on which the products (17) lie during the transport operation, with the product support (25) in particular being stationary, and/or **in that** the product support (25) is divided and an intermediate space (27) extending in the direction of transport (T) is present between a left support part (25a) and a right support part (25b), and/or **in that** the product support (25) comprises a plurality of individual supports which are movable in the direction of transport (T) together with the positioners (21).

9. An apparatus according to any one of the preceding claims,
**characterized in that**
a loading station is arranged above the transport device (15), and/or **in that** the transport device (15) is provided with a positioning aid in a loading region (B), said positioning aid suppressing an entrainment of a respective product (17) by a single support up to the entrainment of the product (17) by the respective positioner (21).

10. A method for slicing food products (17) by means of an apparatus according to any one of the preceding claims,
in which the products (17) to be sliced are transported in a direction of transport (T) over one track or multiple tracks by means of a transport device (15) to a cutting region (S) at whose end a cutting blade (13) moves, in particular in a rotating and/or revolving manner, in a cutting plane (11), wherein the transport device (15) in the or each transport track (19) comprises a plurality of positioners (21) for the products (17) simultaneously driven in the direction of transport (T) and arranged spaced apart from one another in the direction of transport (T), and
wherein the transport device (15) is operated in a cyclic manner with continuously consecutive transport cycles.

11. A method according to claim 10,
**characterized in that**
the cycling of the transport device (15), in particular waiting phases and/or movement phases for loading the transport device (15) with products (17) and/or for carrying out worksteps at workstations (A) in the region of the transport device (15), is determined by the cutting operation, and/or **in that** products (17) coming from the transport device (15) can be taken over by a takeover device (29), with the cycling of the transport device (15) being determined by the operation of the takeover device (29), and/or **in that** at least one workstation (A) is provided for the products (17), with the transport device (15) moving the product compartments through the workstation (A) and/or the workstation (A) being temporarily moved along with the product compartments (17), and with the operation of the workstation (A) being determined by the cutting operation and/or by the operation of the takeover device (29).

12. A method according to claim 10 or 11,
**characterized in that**
the transport device (15) comprises a plurality of transport tracks (19), with the transport tracks (19) being driven and/or operated independently of one another in the direction of transport (T).

13. A method according to any one of the claims 10 to 12,
**characterized in that**
the transport device (15) is configured for cyclic transport movements, with in each case the product (17) being raised in the transport cycles, a forward movement with the product (17) being carried out, the product (17) being lowered and a rearward movement without the product (17) being carried out.

## Revendications

1. Dispositif pour trancher des produits alimentaires (17), en particulier trancheuse à grande vitesse,
comprenant une zone de coupe (S) à l'extrémité de laquelle une lame de coupe (13) se déplace, en particulier en rotation et/ou en révolution, dans un plan de coupe (11) et
comprenant un organe de transport (15) qui transporte les produits (17) à trancher dans une direction de transport (T) vers la zone de coupe (S), sur une piste ou sur plusieurs pistes,
dans lequel
l'organe de transport (15) comprend, dans la ou chaque piste de transport (19), une pluralité de positionneurs (21) pour les produits (17), qui sont entraînés simultanément dans la direction de transport (T) et qui sont disposés à distance les uns des autres dans la direction de transport (T), et chaque section de l'organe de transport (15) située entre deux positionneurs (21) successifs dans chaque piste constitue un compartiment à produit pour précisément un produit à trancher (17),
**caractérisé en ce que**
l'organe de transport (15) est conçu pour un fonctionnement de transport cadencé avec des cycles de transport se succédant en continu, les cycles de transport incluant chacun une phase de mouvement, où les compartiments à produit se déplacent en direction de transport (T), et une phase d'attente, où les compartiments à produit sont à l'arrêt, et
**en ce qu'**il est prévu un organe de reprise (29) qui reprend des produits (17) provenant de l'organe de transport (15), l'organe de reprise (29) étant formé par une alimentations en produits (31) de la zone de coupe (S), ou l'organe de reprise (29) étant prévu en supplément à une alimentation en produits (31) de la zone de coupe (S) et étant conçu pour remettre à l'alimentation en produits (31) les produits provenant de l'organe de transport (15), et le cadencement de l'organe de transport (15) étant adapté au fonctionnement de l'organe de reprise (29).

2. Dispositif selon la revendication 1,
**caractérisé en ce que**
l'organe de reprise (29) transfère les produits (17) d'un trajet de transport à un trajet d'alimentation,
en particulier, l'organe de reprise (29) étant conçu pour soulever et/ou relever les produits (17), et/ou l'organe de reprise (29) étant disposé en aval de l'organe de transport (15), et l'organe de transport (15) étant conçu pour remettre les produits (17) à l'organe de reprise (29), et/ou l'organe de reprise (290) étant conçu pour reprendre les produits (17) directement de l'organe de transport (15).

3. Dispositif selon la revendication 1 ou 2,
**caractérisé en ce que**
au moins un poste de travail (A) pour les produits (17) est disposé à l'intérieur du dispositif, l'organe de transport (15) déplaçant les compartiments à produit à travers le poste de travail (A), et/ou le poste de travail (A) pouvant être déplacé temporairement avec les compartiments à produit (17), et le fonctionnement du poste de travail (A) étant adapté au cadencement de l'organe de transport (15) ou étant déterminé par le fonctionnement de coupe et/ou par le fonctionnement de l'organe de reprise (29).

4. Dispositif selon l'une des revendications précédentes,
**caractérisé en ce que**
les positionneurs (21) forment ou définissent chacun l'extrémité arrière d'un compartiment à produit, et/ou
**en ce que** les positionneurs (21) forment ou comprennent chacun un entraîneur conçu pour emmener le produit (17) pendant le transport, en particulier pour solliciter l'extrémité arrière du produit.

5. Dispositif selon l'une des revendications précédentes,
**caractérisé en ce que**
l'organe de transport (15) comprend plusieurs pistes de transport (19), les pistes de transport (19) pouvant être entraînées indépendamment les unes des autres dans la direction de transport (T).

6. Dispositif selon l'une des revendications précédentes,
**caractérisé en ce que**
l'organe de transport (15) pour les positionneurs (21) comprend au moins un organe d'entraînement allongé (23) qui est mobile dans la direction de transport (T) au moyen d'un entraînement et sur lequel sont montés les positionneurs (21), en particulier l'organe d'entraînement allongé (23) s'étendant en dessous des compartiments à produit, ou l'organe d'entraînement allongé (23) s'étendant latéralement à côté des compartiments à produit.

7. Dispositif selon la revendication 6,
**caractérisé en ce que**
plusieurs organes d'entraînement allongés (23) sont prévus pour la ou chaque piste de transport (19), et/ou
**en ce que** l'organe de transport (15) comprend plusieurs pistes de transport (19), au moins deux organes d'entraînement allongés (23) respectifs étant prévus pour deux pistes de transport (19) directement voisines, qui s'étendent entre les compartiments à produit de ces pistes de transport (19), et/ou **en ce que** l'organe d'entraînement (23) comprend au moins un organe périphérique sans fin, et/ou
**en ce que** les compartiments à produit sont formés et/ou délimités au moins partiellement par l'organe d'entraînement allongé (23).

8. Dispositif selon l'une des revendications précédentes,
**caractérisé en ce que**
l'organe de transport (15) comprend un support de produits (25) sur lequel les produits (17) reposent pendant le fonctionnement de transport, en particulier, le support de produits (25) étant stationnaire, et/ou
**en ce que** le support de produits (25) est divisé, et un espace intermédiaire (27) existe entre une partie de support gauche (25a) et une partie de support droite (25b), lequel s'étend dans la direction de transport (T), et/ou
**en ce que** le support de produits (25) comprend une pluralité de supports individuels qui peuvent être déplacés conjointement avec les positionneurs (21) dans la direction de transport (T).

9. Dispositif selon l'une des revendications précédentes,
**caractérisé en ce que**
un poste de chargement est disposé au-dessus de l'organe de transport (15), et/ou
**en ce que** l'organe de transport (15) est pourvu, dans une zone de chargement (B), d'un moyen d'aide au positionnement qui empêche un produit respectif (17) d'être emmené par un support individuel jusqu'à ce que le produit (17) soit emmené par le positionneur concerné (21).

10. Procédé pour trancher des produits alimentaires (17) au moyen d'un dispositif selon l'une des revendications précédentes,
dans lequel les produits (17) à trancher sont transportés au moyen d'un organe de transport (15) dans une direction de transport (T) sur une ou plusieurs pistes vers une zone de coupe (S) à l'extrémité de laquelle une lame de coupe (13) se déplace, en particulier en rotation et/ou en révolution, dans un plan de coupe (11),
l'organe de transport (15) comprend, dans la ou chaque piste de transport (19), une pluralité de positionneurs (21) pour les produits (17), qui sont entraînés simultanément dans la direction de transport (T) et qui sont disposés à distance les uns des autres dans la direction de transport (T), et l'organe de transport (15) est exploité de manière cadencée avec des cycles de transport se succédant en continu.

11. Procédé selon la revendication 10,
**caractérisé en ce que**
le cadencement de l'organe de transport (15), en particulier des phases d'attente et/ou des phases de mouvement pour charger l'organe de transport (15) avec des produits (17) et/ou pour exécuter des étapes de travail à des postes de travail (A) dans la zone de l'organe de transport (15), est déterminé par le fonctionnement de coupe, et/ou
**en ce que** des produits (17) provenant de l'organe de transport (15) sont repris par un organe de reprise (29), le cadencement de l'organe de transport (15) étant déterminé par le fonctionnement de l'organe de reprise (29),
et/ou
**en ce qu'**au moins un poste de travail (A) est prévu pour les produits (17), l'organe de transport (15) déplaçant les compartiments à produit à travers le poste de travail (A), et/ou le poste de travail (A) étant déplacé temporairement avec les compartiments à produit (17), et le fonctionnement du poste de travail (A) étant déterminé par le fonctionnement de coupe et/ou par le fonctionnement de l'organe de reprise (29).

12. Procédé selon la revendication 10 ou 11,
**caractérisé en ce que**
l'organe de transport (15) comprend plusieurs pistes de transport (19), les pistes de transport (19) étant entraînées et/ou exploitées indépendamment les unes des autres dans la direction de transport (T).

13. Procédé selon l'une des revendications 10 à 12,
**caractérisé en ce que**
l'organe de transport (15) est conçu pour des mouvements de transport cycliques, les cycles de transport respectifs consistant à soulever le produit (17), effectuer un mouvement vers l'avant avec le produit (17), abaisser le produit (17), et effectuer un mouvement vers l'arrière sans produit (17).
